# EUROPEAN PATENT SPECIFICATION

(11) **EP 2 801 132 B1**
(45) Date of publication and mention of the grant of the patent: **14.11.2018**
(21) Application number: 12860767.8
(22) Date of filing: 19.12.2012
(51) Int. Cl.: G02B 6/14, G02B 6/02, G02B 6/036, H01S 3/067, H01S 3/08, H01S 3/042, H01S 3/04, H01S 3/094

(54) **HIGH POWER METAL CLAD MODE ABSORBER**
METALLUMMANTELTER HOCHLEISTUNGSMODUSABSORBER
ABSORBEUR DE MODE DE GAINE MÉTALLIQUE DE GRANDE PUISSANCE

(30) Priority: 19.12.2011 US 201161577335 P
(43) Date of publication of application: 12.11.2014
(73) Proprietor: IPG Photonics Corporation, Oxford, Massachusetts 01540 (US)
(72) Inventor: GAPONSTSEV, Valentin, Oxford, MA 01540 (US); FOMIN, Valentin, 57290 Neunkirchen (DE); ABRAMOV, Mikhail, 57629 Lochum (DE); FERIN, Anton, 57299 Burbach (DE)
(74) Representative: Kohlmann, Kai
(86) International application number: PCT/US2012/070454
(87) International publication number: WO 2013/096363

(56) References cited:
- JP-A- 2008 268 747
- US-A- 5 619 600
- US-A- 5 619 600
- US-A- 5 892 615
- US-A1- 2005 163 424
- US-A1- 2005 163 424
- US-A1- 2007 238 219
- US-A1- 2010 002 730
- US-A1- 2010 135 339
- CHERENKOV G A: "AN OPTICAL-FIBER FILTER WITH ABSORBING LAYERS", TELECOMMUNICATIONS AND RADIO ENGINEERING, SCRIPTA TECHNICA,INC., NEW YORK, NY, US, vol. 41/42, no. 5, 1 May 1987 (1987-05-01) , pages 57-62, XP000022281, ISSN: 0040-2508

## Description

### BACKGROUND OF THE DISCLOSURE

### Field of Disclosure

The disclosure relates to high power fiber laser systems. In particular, the disclosure relates to a clad mode stripper/absorber operative to trap and remove undesirable cladding-guided light in passive fibers.

### Prior Art

High power single mode fiber laser systems ("HPSMFLS") are typically configured with one or more amplifying cascades each including an active double clad fiber which is either side- or end pumped by multimode (MM) pump light. The pump light propagating along a light-guide waveguide cladding is often not fully absorbed along the length of the active fiber and eventually coupled into a cladding of SM passive fibers. In addition, power losses at splices are also responsible for multimode light which propagates in a waveguiding cladding under a polymeric protective sheath. Besides, backreflecting light from the surface to be laser treated may also be coupled in the cladding. Even at moderate pump light absorption rates varying between 10-12 dB the clad-guided light can easily reach 300-600 W at the final amplifying stage. The clad guided light is undesirable for the following reasons.

Typically, the SM passive fiber of HPSMFLS is surrounded by a flexible polymeric protective sheath which has a lower refractive index than that of the cladding region. At fiber bends or spliced connections, the total reflection of the cladding region may be disturbed leading to the escape of clad-guided light into the protective sheath. As a consequence, the protective sheath may be overheated and destroyed. Furthermore, the MM radiation carried in the cladding may damage the end regions of the fiber which is typically a passive, SM delivery fiber or SM passive fiber coupled between two gain blocks, one of which, for example, is pumped in a direction counter to the signal propagation. Finally, if the clad-guided MM radiation reaches the end of the delivery fiber, the beam quality of the transmitted light signal may be worsened, which can adversely affect other optical components and the processing quality.

Devices configured to remove clad light and convert the light energy into the heat energy are known as cladding mode absorbers ("CMA"). Typically, a CMA is provided along a length of fiber stripped from the protective sheath, which covers the cladding, and configured as a light-guide polymer compound with a refractive index higher than that one of the cladding. The polymer compound absorbers typically allow decoupling cladding light with a power up to about 100 to about 400 W. JP 2008 268747 A discloses such a cladding mode absorber according to the preamble of claim 1.

Some of structural limitations of the known CMAs include a low resistance to mechanical stresses caused by non-uniform thermo-dependent expansion/contraction of fiber and CMA. Typically, mechanical stresses lead to micro bending losses in single mode ("SM") large mode area ("LMA") fibers and excitation of high order modes ("HOMs").

Still a further limitation is associated with a relatively low thermal conductivity of polymer compound leading to its high temperatures. A 110°C temperature is generally considered critical, and higher temperatures lead to the destruction the CMA. This critical temperature can be even lower during abrupt temperature changes occurring upon energizing a fiber laser system.

A need therefore exists for a HPSMFLS configured with a CMA which is characterized by high temperature- and mechanical stress-resistant structure.

A further need exists for a method of manufacturing the improved CMA.

### SUMMARY OF THE DISCLOSURE

These needs are satisfied by the disclosed metal light clad energy absorber ("MLCA") configured to absorb light while withstanding elevated temperatures and provide a stress-resistant structure. The invention is defined in claims 1, 13 and 20.

One aspect of the disclosure relates to a MLCA which, in contrast to the known polymer compound-based absorbers, includes a filling of liquid metals and their alloys provided along a stripped region of protective coating. The filling is selected to absorb light and have a low melting temperature; high thermo-conductivity, desired density and good adhesion to the exposed cladding (quartz). As will be disclosed below, the disclosed absorber can withstand considerably higher input powers than known silicon-based absorbers.

A further aspect of the disclosure relates to improving the stress resistance of the disclosed MLCA. In particular the fiber with the absorber is further placed in a heat sink configured as a sleeve surrounding the filling and adhered thereto. Due to high thermo-conductive characteristics, the absorber operates as effective heat evacuating media between quartz and metal heatsink.

### BRIEF DESCRIPTION OF THE DRAWINGS

FIG. 1 is a diagrammatic view of a high power single mode fiber laser system ("HPSMFLS") provided with the disclosed metal light clad absorber ("MLCA")
FIG. 1A is a diagrammatic view of a HPSMFLS including a master oscillator/power amplifier configuration ("MOPA") with the disclosed metal absorber provided on a passive fiber coupled between the components of the illustrated system.
FIG. 2 is a diagrammatic view of a SM passive output fiber provided with the disclosed MLCAC.
FIG. 3 is a diagrammatic view of a modified SM output fiber provided with the disclosed MLCA.
FIG. 4 is an exploded view of the disclosed MLCA mounted in a heat sink.
FIG. 5 is a graph illustrating dependence of maximal temperature of the sleeve of the MLCA from dispersed power.

### SPECIFIC DESCRIPTION

Reference will now be made in detail to the disclosed energy absorber, high power fiber laser system incorporating the absorber and a method for manufacturing the latter. Wherever possible, same or similar reference numerals are used in the drawings and the description to refer to the same or like parts or steps. The drawings are in simplified form and are far from precise scale. For purposes of convenience and clarity only, directional terms may be used with respect to the plane of the drawing sheets and not be construed to limit the scope. Unless specifically noted, it is intended that the words and phrases in the specification and claims be given the ordinary and accustomed meaning to those of ordinary skill in the fiber laser arts.

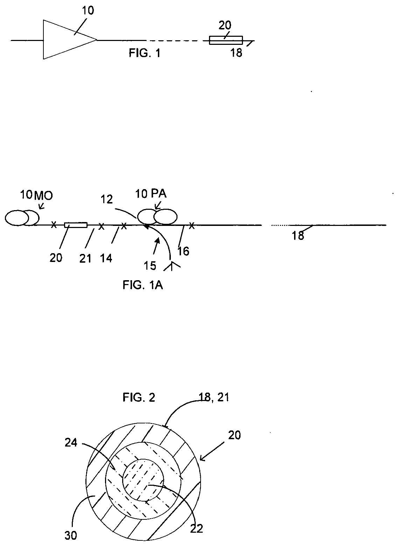

FIG. 1 illustrates a diagrammatic view of a typical gain block 10 which is either alone or in combination with similarly configured gain blocks is operative to emit an output substantially SM beam reaching kW levels. The output beam is then delivered to the destination point by a delivery single mode ("SM") passive fiber 18. The latter is provided with a clad mode absorber 20 made from liquid metals, i.e., metals with a low-temperature melting point, or a combination of liquid metals and their alloy. The absorber 20, thus, is operative to trap and absorb unwanted modes guided along the clad of fiber 18.

FIG. 1A illustrates two gain blocks 10 - components of MOPA, which as known to one of ordinary skill in the art, includes a master oscillator MO and a power amplifier PA. In this schematics, absorber 20, in addition to or alternatively to the delivery fiber, may be provided on a passive fiber 21 optically coupling the MO and PA, as shown. The fiber 21 may receive an unabsorbed pump signal from a pump 15 which, for instance, is coupled into the PA in a direction counter to a forward propagating direction of light signal.

The gain block 10, for example, power amplifier PA, includes an active fiber 12, i.e. the fiber doped with ions of one or more rare earth elements, such as ytterbium, erbium, thulium and etc, and single SM input and output passive fibers 14, 16, respectively. The active fiber 12 is configured with one or more claddings and a multimode core which, if desired, is configured to support substantially a fundamental mode at the desired wavelength. A multimode ("MM") pump light, emitted by a pump unit 15, is coupled into a waveguide cladding, and as it propagates therealong, is gradually absorbed by the core. Not all pump light is absorbed, some of it remains in the cladding. The unabsorbed pump and other differently originated and unwanted modes are guided further through the cladding of passive output fiber 16 and propagate further along the clad of delivery fiber 21. The existence of the clad light is highly undesirable for a variety reasons discussed previously and should be minimized and desirably totally eliminated. Note that while the above discusses single mode systems and fibers, the disclosed absorber may be used in conjunction with multimode fibers.

Referring to FIG. 2, fiber 18 or 21, besides core 22 and cladding 24, is further configured with a protective polymeric protective film (stripped and thus not shown) with a refractive coefficient lower than that one of the cladding. To create conditions for absorbing clad propagating modes, the film is stripped along a desired axial region of fiber 18, 21 exposing a stretch of cladding 24 which may be immersed into absorber 20 made of a liquid-base metal and/or its alloys 30. The metal, in contrast to polymer compound, has excellent reflective characteristics. The clad light and particularly those modes that propagate along the border between the metal coating and quartz periodically impinge upon the former. A large portion of light incident on metal 30 is absorbed; the rest continues its propagation and is eventually greatly reduced or completely eliminated. The metal absorber 20 can withstand high mechanical stresses, higher temperatures and, although the absorption is still limited, it is distributed better than in traditional polymer compounds. Selecting the optimal composition of absorber 20 based on the known parameters of the entire fiber system and the desired location provide the removal of clad light with a maximum possible light power that can heat the composition at a temperature lower than a threshold temperature known to damage absorber 20 and other optical components of the system.

While it is possible to simply apply and adhere liquid metal to quartz, surface stresses may still be considerable because of imperfect adhesion of the liquid metal to the quartz. Hence, the surface of quartz is textured so that it is not smooth but has microscopic formations which improve a bond between quartz/clad and metal absorber. Also, the latter is selected to have a coefficient of thermal expansion close to that one of silicon, which also reduces mechanical stresses.

Liquid metals and their respective alloys exist in a liquid phase at room or about room temperatures and may include, among others, Gallium ("Ga") and its alloys, such as Galinstan. The latter is a composition of 68% Ga (Gallium), 21.5% In (Indium) and 10% Tin Sn and has a freezing point of about -19° Celsius after which this material tends to expand. Galinstan, like other liquid metals and alloys, has a high degree of thermal conductivity which is superior to polymer compound and thus has excellent heat conducting and dissipating characteristics. The tests show that energy absorber made of this alloy can safely dissipate higher than 600 watts of optical power of the clad-guided light. The composition of alloy may be altered to withstand higher powers reaching a kW level. In particular, the mass fraction of the alloys' components is controllably adjusted so that MM light is removed from the cladding with a maximum possible light power heating the alloy at temperatures lower than a threshold temperature known to damage it.

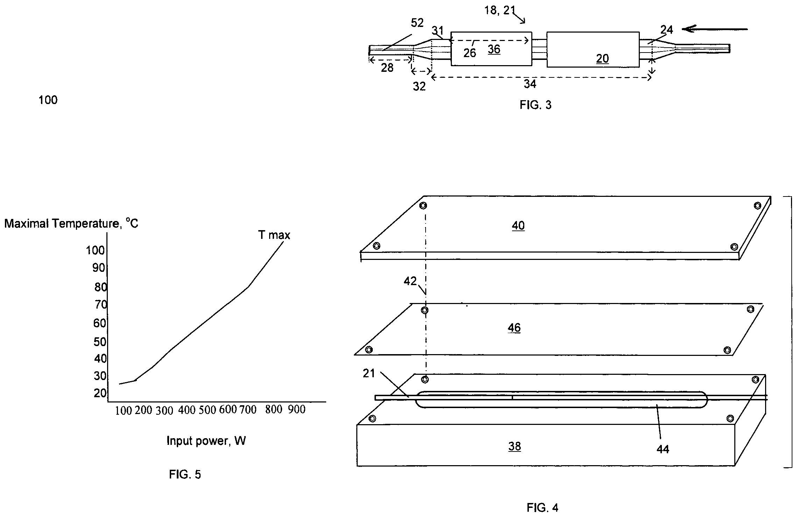

Referring to FIG. 3, to reduce a high power density of clad-guided MM light and somewhat alleviate thermal loads on absorber 20, preferably, passive fiber 18, 21 may have a double bottleneck-shaped cross-section, which is also referred to as a twin bottle ("TB") fiber. The TB geometry is disclosed in detail in US 2011/0064097 A1 and US 2011/0064095 A1. The configuration of TB fiber 18 or 21, thus, includes spaced apart relatively uniform small-diameter end regions 28, relatively uniform large-diameter central region 34 and transition regions 32 between respective end and central regions which allow adiabatic expansion of guided light. Based on the foregoing considerations, absorber 20 is preferably, but not necessarily, provided along central region 34 where the power density is relatively low. The diameter of absorber 20 may be the same as the outer diameter of polymeric sheath or film 31 or greater than the latter. TB fiber 18, 21 may further have another absorber 36 made of polymer compound which is located downstream from absorber 20. The central region 34 of fiber 18 may be configured with about a 300-micron diameter.

Referring now to FIG. 4, high light powers may require a heat sink made from a ductile material, such as copper, wolfram alloys with copper and others which are configured with good thermal conductivity and minimal thermal expansion preventing fiber stresses. The preferred housing material does not react with the metal alloy. The sink includes a first part 38 and a second part 40 detachably coupled to one another by fasteners 42, only one of which is shown, and configured to enclose a length of passive fiber 18, 21. The length of the latter is placed in a groove 44 filled with absorber 20 and provided in part 38. The opposite ends of the fiber's stretch within groove 44 are coupled to part 38 by an adhesive, such as silicone Gel. The latter is also applied to absorber 20 and any other stripper provided on fiber 18, which may be also located in groove 44, so as render the structure hermetical. To prevent overheating of housing part 40, which covers the entire unit, and even further improve the air tightness of the unit, a foil 46, which may be made, for example, from Al, is packed between the fiber length and part 40. Alternatively, Silicone Gel, UV glues or epoxy may fully cover absorber 20 without the use of part 40. These materials are flexible and efficiently compensate for thermal expansion of the metal.

FIG. 5 illustrates the temperature of the heat sink or housing enclosing the length of fiber 18 with the disclosed absorber from the dispersed power. Even with powers reaching 800 W, the absorber preserves its structural integrity.

The disclosed absorber is particularly advantageous in the context of high power fiber laser systems. Although the above has mostly referred to the stripping capability of absorber 20 of forward propagating light, it also serves as a filter of backreflected light. Also, while the above disclosed configuration is described in the context of SM systems, the disclosed absorber can be efficiently used in MM systems as well. For example, it may be provided on a MM delivery fiber so as to minimize backreflection. Furthermore, the disclosed configuration may be used in both continuous wave and pulsed laser configurations.

## Claims

1. A clad mode absorber unit, comprising:
a passive fiber (18, 21) provided with a core (22), a cladding (24) surrounding the core (22) and capable of supporting an undesirable multimode clad light, and a polymeric sheath (31) coated upon the cladding (24), the sheath (31) having a discontinuous surface which defines an opening terminating in a plane of the cladding (24); and an absorber (20) covering an exposed portion of the cladding (24) within the opening;
**characterized in that**
the absorber (20) has a composition which is selected from the group consisting of liquid metals and liquid metal alloys (30) and a combination thereof, the composition being configured to remove the multimode light having an optimal light power that heats the composition at a temperature lower than a threshold temperature at which the absorber (20) is damaged.

2. The clad mode absorber unit of claim 1, wherein the absorber (20) is made from material consisting of Gallium, Indium, and alloys thereof, the multimode light having a power reaching a level up to one kW.

3. The clad mode absorber unit of claim 1, wherein the absorber (20) is configured from a Galistan@ alloy including a composition of Ga, In and Sn..

4. The clad mode absorber unit of claim 1 further comprising a heat sink configured with first and second parts (38, 40) which are detachably coupled to one another, the first part (38) being configured with a groove (44) receiving a stretch of the passive fiber (18, 21) with the absorber (20), wherein the absorber (20) is enclosed within the heat sink (38, 40).

5. The clad mode absorber unit of claim 4, wherein the heat sink includes a metal base (38) and a top (40) coupled to the base (38), the top (40) being selected from the group consisting of one or more malleable metals and Silicone Gel.

6. The clad mode absorber unit of claim 1, wherein the exposed portion of the cladding (24) is textured so as to improve adhesion of the absorber (20) to the cladding (24).

7. The clad mode absorber unit of claim 1, wherein the absorber (20) is configured with a coefficient of thermal expansion selected to substantially match that one of the cladding (24).

8. The clad mode absorber unit of claim 7, wherein the passive fiber (18, 21) includes a core (22) surrounded by the cladding (24) and configured to guiding single mode light with powers reaching one or more kWs.

9. The clad mode absorber unit of claim 8, wherein the core (22) and cladding (24) each have a bottleneck-shaped cross-section including an input end region (28) with a uniform diameter, a central region (34) with a uniform diameter larger than that one of the end region (28) and a frustoconical transition region (32) bridging the end region (28) and central region (34), the absorber (20) extending over at least a portion of the central region (34).

10. The clad mode absorber unit of claim 8, wherein the core (22) and cladding (24) each have a double bottleneck-shaped cross-section including spaced input end regions (28) with a uniform diameter, a central region (34) with a uniform diameter larger than that one of the end regions (28) and frustoconical regions (32) bridging opposite ends of the central region (34) and respective end regions (28), the absorber (20) extending over at least a portion of the central region (34).

11. The clad mode absorber unit of claim 8, wherein the core (22) and cladding (24) each have a double bottleneck-shaped cross-section including spaced input end regions (28) with a uniform diameter, a central region (34) with a uniform diameter larger than that one of the end regions (28) and frustoconical regions (32) bridging respective opposite ends of the central region (34) and end regions (28), one of the transitional regions (32) being longer than the other one, the absorber (20) overlapping portions of respective central (34) and longest frustoconical region (32).

12. The clad mode absorber unit of claim 1, wherein the passive fiber (18,21) is further provided with at least one additional absorber (36) made from polymer compound and spaced from the metal absorber (20).

13. A method of manufacturing a clad mode absorber configured to remove multimode clad light from a cladding (24) of a passive fiber (18, 21), wherein the cladding (24) is sandwiched between a core (22) and a protective polymeric sheath (31), the method comprising:
removing a stretch of the sheath (31) from a desired location of the cladding (24) so as to expose a predetermined length of the cladding (24), thereby forming an opening in the sheath (31); and
filling the opening with a composition including liquid metals or liquid metal alloys (30) or a combination thereof, thereby covering the length of the cladding (24) so as to remove an optimal amount of the multimode light having a predetermined light energy which heats the composition at a desired temperature lower than a critical temperature at which the absorber (20) is damaged.

14. The method of claim 13, wherein the absorber (20) is made from material consisting of Gallium, Indium, and alloys thereof and having a coefficient of thermal expansion substantially matching that one of the cladding (24).

15. The method of claim 13, wherein the absorber (20) is configured from a Galinstan@ alloy including a composition of about 68% Ga, about 21.5% In and about 10% Sn, the composition having a freezing point of about -19° Celsius.

16. The method of claim 13 further comprising:
providing a first housing half (38) made from a malleable metal with a groove (44);
filling the groove (44) with the mode absorber (20);
placing a stretch of the passive fiber (18, 21) including the opening into the mode absorber (20), thereby covering the exposed length of the cladding (24); and
detachably coupling a second housing half (40) made from a malleable metal to the first housing half (38), thereby hermetically enclosing the stretch of the passive fiber (18, 21) with the absorber (20).

17. The method of claim 16 further comprising adhering opposite ends of the stretch to the first housing half (38) with a polymer compound.

18. The method of claim 13 further comprising texturing a surface of the exposed cladding (24) before the application of the mode absorber (20).

19. The method of claim 13, wherein the passive fiber (18, 21) has a configuration having a bottleneck-shaped cross-section or a double bottleneck-shaped cross-section.

20. A high power fiber laser system, comprising:
a plurality of gain blocks (10) spaced along a light path and each having an active fiber;
at least one pump unit (15) operative to emit and couple multimode pump light into the active fiber, wherein a portion of the multimode pump light is not absorbed in a core of the active fiber;
a plurality of passive fibers (18, 21) optically coupled to the respective active fibers and each having a cladding (24) sandwiched between a core (22) and a polymeric sheath (31), the polymeric sheath (31) of at least one passive fiber (18, 21) having a discontinuous surface which defines an opening exposing a predetermined length of the cladding (24); and
a clad mode absorber (20) provided in the opening and having a composition selected from liquid metal or liquid metal alloys (30) or a combination thereof, the composition being configured to remove at least a portion of the unabsorbed light having a predetermined light power which heats the composition along the predetermined length at a temperature lower than a threshold temperature at which the absorber (20) is damaged.

## Patentansprüche

1. Mantelmodus-Absorbereinheit, umfassend:
eine passive Faser (18, 21), die mit einem Kern (22) versehen ist, wobei eine Ummantelung (24) den Kern (22) umgibt und imstande ist, ein unerwünschtes Mehrfachmantelmoduslicht zu unterstützen, und einer polymeren Hülle (31), die auf die Ummantelung (24) aufgebracht ist, wobei die Hülle (31) eine diskontinuierliche Oberfläche aufweist, die eine Öffnung definiert, die in einer Ebene der Ummantelung (24) endet; und
einen Absorber (20), der einen innerhalb der Öffnung freiliegenden Abschnitt der Ummantelung (24) bedeckt;
**dadurch gekennzeichnet, dass**;
der Absorber (20) eine Zusammensetzung hat, die ausgewählt ist aus der Gruppe bestehend aus Flüssigmetallen und Flüssigmetalllegierungen (30) und einer Kombination davon, wobei die Zusammensetzung konfiguriert ist, das Mehrfachmoduslicht mit einer optimalen Lichtleistung zu entfernen, das die Zusammensetzung bei einer Temperatur unter einer Schwellenwerttemperatur erwärmt, bei der der Absorber (20) beschädigt wird.

2. Mantelmodus-Absorbereinheit nach Anspruch 1, wobei der Absorber (20) aus einem Material besteht, bestehend aus Gallium, Indium und Legierungen davon, wobei das Mehrfachmoduslicht eine Leistung hat, die einen Pegel bis zu einem kW erreicht.

3. Mantelmodus-Absorbereinheit nach Anspruch 1, wobei der Absorber (20) aus einer Galistan@-Legierung gestaltet ist, enthaltend eine Zusammensetzung aus Ga, In und Sn.

4. Mantelmodus-Absorbereinheit nach Anspruch 1, ferner umfassend eine Wärmesenke, die mit ersten und zweiten Teilen (38, 40) gestaltet ist, die lösbar aneinander gekoppelt sind, wobei der erste Teil (28) mit einer Rille (44) gestaltet ist, die eine Länge der passiven Faser (18, 21) mit dem Absorber (20) aufnimmt, wobei der Absorber (20) in der Wärmesenke (38, 40) eingeschlossen ist.

5. Mantelmodus-Absorbereinheit nach Anspruch 4, wobei die Wärmesenke eine Metallbasis (38) und eine Oberseite (40), die an die Basis (38) gekoppelt ist, enthält, wobei die Oberseite (40) ausgewählt ist aus der Gruppe bestehend aus einem oder mehreren formbaren Metallen und Silikongel.

6. Mantelmodus-Absorbereinheit nach Anspruch 1, wobei der freiliegende Abschnitt der Ummantelung (24) texturiert ist, um so ein Adhäsion des Absorbers (20) an der Ummantelung (24) zu verbessern.

7. Mantelmodus-Absorbereinheit nach Anspruch 1, wobei der Absorber (20) mit einem Wärmeausdehnungskoeffizienten gestaltet ist, der so gewählt ist, dass er im Wesentlichen zu jenem der Ummantelung (24) passt.

8. Mantelmodus-Absorbereinheit nach Anspruch 7, wobei die passive Faser (18, 21) einen Kern (22) enthält, der von der Ummantelung (24) umgeben ist, und gestaltet ist, Einzelmoduslicht mit Leistungen zu führen, die ein oder mehrere kW erreichen.

9. Mantelmodus-Absorbereinheit nach Anspruch 8, wobei der Kern (22) und die Ummantelung (24) jeweils einen flaschenhalsförmigen Querschnitt haben, enthaltend eine Eingabeendregion (28) mit einem gleichförmigen Durchmesser, eine zentrale Region (34) mit einem gleichförmigen Durchmesser, der größer als jener der Endregion (28) ist, und eine kegelstumpfe Übergangsregion (32), die die Endregion (28) und die zentrale Region (34) überbrückt, wobei sich der Absorber (20) über zumindest einen Abschnitt der zentralen Region (34) erstreckt.

10. Mantelmodus-Absorbereinheit nach Anspruch 8, wobei der Kern (22) und die Ummantelung (24) jeweils einen doppelt flaschenhalsförmigen Querschnitt haben, enthaltend beabstandete Eingabeendregionen (28) mit einem gleichförmigen Durchmesser, eine zentrale Region (34) mit einem gleichförmigen Durchmesser, der größer als jener der Endregionen (28) ist,und kegelstumpfe Regionen (32), die gegenüberliegende Enden der zentralen Region (34) und entsprechende Endregionen (28) überbrücken, wobei sich der Absorber (20) über zumindest einen Abschnitt der zentralen Region (34) erstreckt.

11. Mantelmodus-Absorbereinheit nach Anspruch 8, wobei der Kern (22) und die Ummantelung (24) jeweils einen doppelt flaschenhalsförmigen Querschnitt haben, enthaltend beabstandete Eingabeendregionen (28) mit einem gleichförmigen Durchmesser, eine zentrale Region (34) mit einem gleichförmigen Durchmesser, der größer als jener der Endregionen (28) ist,und kegelstumpfe Regionen (32), die entsprechende gegenüberliegende Enden der zentralen Region (34) und Endregionen (28) überbrücken, wobei eine der Übergangsregionen (32) länger als die andere ist, wobei der Absorber (20) Abschnitte der zentralen (34) bzw. längsten kegelstumpfen Region (34) überlappt.

12. Mantelmodus-Absorbereinheit nach Anspruch 1, wobei die passive Faser (18, 21) ferner mit zumindest einem zusätzlichen Absorber (36) versehen ist, der aus einer Polymerverbindung besteht und vom Metallabsorber (20) beabstandet ist.

13. Verfahren zur Herstellung eines Mantelmodusabsorbers, der gestaltet ist, Mehrfachmantelmoduslicht von einer Ummantelung (24) einer passiven Faser (18, 21) zu entfernen, wobei die Ummantelung (24) zwischen einem Kern (22) und einer schützenden Polymerhülle (31) liegt, das Verfahren umfassend:
Entfernen einer Länge der Hülle (31) von einer gewünschten Stelle der Ummantelung (24), um so eine vorbestimmte Länge der Ummantelung (24) freizulegen, wodurch eine Öffnung in der Hülle (31) gebildet wird; und
Füllen der Öffnung mit einer Zusammensetzung, die Flüssigmetalle oder Flüssigmetalllegierungen (30) oder eine Kombination davon enthält, um dadurch die Länge der Ummantelung (24) zu bedecken, um so eine optimale Menge des Mehrfachmoduslichts mit einer vorbestimmten Lichtenergie zu entfernen, die die Zusammensetzung bei einer gewünschten Temperatur erwärmt, die niedriger als eine kritische Temperatur ist, bei der der Absorber beschädigt wird.

14. Verfahren nach Anspruch 13, wobei der Absorber (20) aus einem Material besteht, bestehend aus Gallium, Indium und Legierungen davon, und einen Wärmeausdehnungskoeffizienten aufweist, der zu jenem der Ummantelung (24) passt.

15. Verfahren nach Anspruch 13, wobei der Absorber (20) aus einer Galistan@-Legierung gestaltet ist, enthaltend eine Zusammensetzung aus etwa 68% Ga, etwa 21,5% In und etwa 10% Sn, wobei die Zusammensetzung einen Gefrierpunkt von etwa -19° Celsius aufweist.

16. Verfahren nach Anspruch 13, ferner umfassend:
Vorsehen einer ersten Gehäusehälfte (38), die aus einem formbaren Metall besteht, mit einer Rille (44);
Füllen der Rille (44) mit dem Modusabsorber (20);
Anordnen einer Länge der passiven Faser (18, 21), enthaltend die Öffnung, im Modusabsorber (20), wodurch die freiliegende Länge der Ummantelung (24) bedeckt wird; und
lösbares Koppeln einer zweiten Gehäusehälfte (40), die aus einem formbaren Metall besteht, an die erste Gehäusehälfte (38), wodurch die Länge der passiven Faser (18, 21) mit dem Absorber (20) hermetisch eingeschlossen wird.

17. Verfahren nach Anspruch 16, ferner umfassend ein Ankleben gegenüberliegender Enden der Länge an die erste Gehäusehälfte (38) mit einer Polymerverbindung.

18. Verfahren nach Anspruch 13, ferner umfassend ein Texturieren einer Oberfläche der freiliegenden Ummantelung (24) vor dem Aufbringen des Modusabsorbers (20).

19. Verfahren nach Anspruch 13, wobei die passive Faser (18, 21) eine Gestalt mit einem flaschenhalsförmigen Querschnitt oder einem doppelt flaschenhalsförmigen Querschnitt aufweist.

20. Hochleistungsfaserlasersystem, umfassend:
eine Vielzahl von Verstärkungsblöcken (10), die entlang eines Lichtwegs beabstandet sind und jeweils eine aktive Faser haben;
zumindest eine Pumpeneinheit (15), die betriebsbereit ist, Mehrfachmoduspumpenlicht auszustrahlen und in die aktive Faser zu koppeln, wobei ein Teil des Mehrfachmoduspumpenlichts nicht in einem Kern der aktiven Faser absorbiert wird;
eine Vielzahl passiver Fasern (18, 21), die optisch an die entsprechenden aktiven Fasern gekoppelt sind und jeweils eine Ummantelung (24) aufweisen, die zwischen einem Kern (22) und einer Polymerhülle (31) liegt, wobei die Polymerhülle (31) zumindest einer passiven Faser (18, 21), eine diskontinuierliche Oberfläche aufweist, die eine Öffnung definiert, die eine vorbestimmte Länge der Ummantelung (24) freilegt; und
einen Mantelmodusabsorber (20), der in der Öffnung vorgesehen ist und eine Zusammensetzung aufweist, die ausgewählt ist aus Flüssigmetallen und Flüssigmetalllegierungen (30) und einer Kombination davon, wobei die Zusammensetzung konfiguriert ist, zumindest einen Abschnitt des unabsorbierten Lichts mit einer vorbestimmten Lichtleistung zu entfernen, die die Zusammensetzung entlang der vorbestimmten Länge bei einer Temperatur erwärmt, die niedriger ist als eine Schwellentemperatur, bei der der Absorber (20) beschädigt wird.

## Revendications

1. Unité d'absorbeur de mode de gaine, comprenant :
une fibre passive (18, 21) dotée d'un coeur (22), d'un gainage (24) entourant le coeur (22) et capable de supporter une lumière de gaine multimode indésirable, et d'une enveloppe polymère (31) revêtue sur le gainage (24), l'enveloppe (31) ayant une surface discontinue qui définit une ouverture se terminant dans un plan du gainage (24) ; et
un absorbeur (20) recouvrant une partie exposée du gainage (24) à l'intérieur de l'ouverture ;
**caractérisée en ce que** l'absorbeur (20) a une composition sélectionnée dans le groupe formé par des métaux liquides et des alliages de métaux liquides (30) et une combinaison de ceux-ci, la composition étant configurée pour éliminer la lumière multimode ayant une puissance lumineuse optimale qui chauffe la composition à une température inférieure à une température de seuil à laquelle l'absorbeur (20) est endommagé.

2. Unité d'absorbeur de mode de gaine selon la revendication 1, dans laquelle l'absorbeur (20) est constitué de matériaux consistant en du gallium, de l'indium et des alliages de ceux-ci, la lumière multimode ayant une puissance atteignant un niveau jusqu'à un kW.

3. Unité d'absorbeur de mode de gaine selon la revendication 1, dans laquelle l'absorbeur (20) est configuré à partir d'un alliage de Galistan@alloy incluant une composition de Ga, In et Sn.

4. Unité d'absorbeur de mode de gaine selon la revendication 1, comprenant en outre un dissipateur de chaleur configuré avec des première et deuxième parties (38, 40) couplées de manière détachable l'une à l'autre, la première partie (38) étant configurée avec une rainure (44) recevant un tronçon de la fibre passive (18, 21) avec l'absorbeur (20), dans laquelle l'absorbeur (20) est enfermé à l'intérieur du dissipateur de chaleur (38, 40).

5. Unité d'absorbeur de mode de gaine selon la revendication 4, dans laquelle le dissipateur de chaleur comprend une base métallique (38) et une partie supérieure (40) couplée avec la base (38), la partie supérieure (40) étant sélectionnée dans le groupe formé par un ou plusieurs métaux malléables et du gel de silicone.

6. Unité d'absorbeur de mode de gaine selon la revendication 1, dans laquelle la partie exposée du gainage (24) est texturée de façon à améliorer l'adhésion de l'absorbeur (20) au gainage (24).

7. Unité d'absorbeur de mode de gaine selon la revendication 1, dans laquelle l'absorbeur (20) est configuré avec un coefficient de dilatation thermique sélectionné pour sensiblement correspondre à celui du gainage (24).

8. Unité d'absorbeur de mode de gaine selon la revendication 7, dans laquelle la fibre passive (18, 21) comprend un coeur (22) entouré par le gainage (24) et configuré pour guider de la lumière monomode avec des puissances atteignant un ou plusieurs kWs.

9. Unité d'absorbeur de mode de gaine selon la revendication 8, dans laquelle le coeur (22) et le gainage (24) ont chacun une section transversale en forme de goulot comprenant une zone d'extrémité d'entrée (28) avec un diamètre uniforme, une zone centrale (34) avec un diamètre uniforme plus grand que celui de la zone d'extrémité (28) et une zone de transition tronconique (32) jointive entre la zone d'extrémité (28) et la zone centrale (34), l'absorbeur (20) s'étendant sur au moins une partie de la zone centrale (34).

10. Unité d'absorbeur de mode de gaine selon la revendication 8, dans laquelle le coeur (22) et le gainage (24) ont chacun une section transversale en forme de goulot double comprenant des zones d'extrémité d'entrée (28) espacées avec un diamètre uniforme, une zone centrale (34) avec un diamètre uniforme plus grand que celui des zones d'extrémité (28) et des zones tronconiques (32) jointives entre des extrémités opposées de la zone centrale (34) et des zones d'extrémité (28) respectives, l'absorbeur (20) s'étendant sur au moins une partie de la zone centrale (34).

11. Unité d'absorbeur de mode de gaine selon la revendication 8, dans laquelle le coeur (22) et le gainage (24) ont chacun une section transversale en forme de goulot double comprenant des zones d'extrémité d'entrée (28) espacées avec un diamètre uniforme, une zone centrale (34) avec un diamètre uniforme plus grand que celui des zones d'extrémité (28), et des zones tronconiques (32) jointives entre des extrémités opposées respectives de la zone centrale (34) et des zones d'extrémité (28), l'une des zones de transition (32) étant plus longue que l'autre, l'absorbeur (20) chevauchant des parties respectivement de la zone centrale (34) et tronconique la plus longue (32).

12. Unité d'absorbeur de mode de gaine selon la revendication 1, dans laquelle la fibre passive (18, 21) est en outre dotée d'au moins un absorbeur (36) supplémentaire constitué d'un composé polymère et espacé par rapport à l'absorbeur métallique (20).

13. Procédé de fabrication d'un absorbeur de mode de gaine configuré pour éliminer de la lumière de gaine multimode d'un gainage (24) d'une fibre passive (18, 21), dans lequel le gainage (24) est pris en sandwich entre un coeur (22) et une enveloppe de protection polymère (31), le procédé comprenant :
l'élimination d'un tronçon de l'enveloppe (31) d'un emplacement souhaité du gainage (24) de manière à exposer une longueur prédéterminée du gainage (24) en formant de la sorte une ouverture dans l'enveloppe (31) ; et
le remplissage de l'ouverture avec une composition comprenant des métaux liquides ou des alliages de métaux liquides (30) ou une combinaison de ceux-ci, en recouvrant de la sorte la longueur du gainage (24) de manière à éliminer une quantité optimale de la lumière multimode ayant une énergie lumineuse prédéterminée qui chauffe la composition à une température souhaitée inférieure à une température critique à laquelle l'absorbeur (20) est endommagé.

14. Procédé selon la revendication 13, dans lequel l'absorbeur (20) est constitué d'un matériau consistant en du gallium, de l'indium et des alliages de ceux-ci, et ayant un coefficient de dilatation thermique correspondant sensiblement à celui du gainage (24).

15. Procédé selon la revendication 13, dans lequel l'absorbeur (20) est configuré à partir d'un alliage de Galinstan@alloy comprenant une composition de près de 68% de Ga, près de 21,5% d'In et près de 10% de Sn, la composition ayant un point de congélation de près de -19° Celsius.

16. Procédé selon la revendication 13, comprenant en outre :
la fourniture d'une première moitié de boîtier (38) constituée d'un métal malléable avec une rainure (44) ;
le remplissage de la rainure (44) avec l'absorbeur de mode (20) ;
le placement d'un tronçon de la fibre passive (18, 21) incluant l'ouverture dans l'absorbeur de mode (20), en recouvrant de la sorte la longueur exposée du gainage (24) ; et
le couplage de manière détachable d'une deuxième moitié de boîtier (40) constituée d'un métal malléable avec la première moitié de boîtier (38), en enfermant ainsi hermétiquement le tronçon de fibre passive (18, 21) avec l'absorbeur (20).

17. Procédé selon la revendication 16, comprenant en outre le fait de faire adhérer des extrémités opposées du tronçon sur la première moitié de boîtier (38) avec un composé polymère.

18. Procédé selon la revendication 13, comprenant la texturation d'une surface du gainage exposé (24) avant l'application de l'absorbeur de mode (20).

19. Procédé selon la revendication 13, dans lequel la fibre passive (18, 21) a une configuration ayant une section transversale en forme de goulot ou une section transversale en forme de goulot double.

20. Système laser à fibre de haute puissance, comprenant :
une pluralité de blocs de gain (10) espacés le long d'un trajet lumineux et ayant chacun une fibre active ;
au moins une unité de pompage (15) opérative pour émettre de la lumière de pompage multimode et la coupler dans la fibre active, dans lequel une partie de la lumière de pompage multimode n'est pas absorbée dans un coeur de la fibre active ;
une pluralité de fibres passives (18, 21) couplées optiquement aux fibres actives respectives et ayant chacune un gainage (24) pris en sandwich entre un coeur (22) et une enveloppe polymère (31), l'enveloppe polymère (31) de l'au moins une fibre passive (18, 21) ayant une surface discontinue qui définit une ouverture exposant une longueur prédéterminée du gainage (24) ; et
un absorbeur de mode de gaine (20) fourni dans l'ouverture et ayant une composition sélectionnée à partir de métaux liquides ou d'alliages de métaux liquides (30) ou une combinaison de ceux-ci, la composition étant configurée pour éliminer au moins une partie de la lumière non absorbée ayant une puissance lumineuse prédéterminée qui chauffe la composition le long de la longueur prédéterminée à une température inférieure à une température de seuil à laquelle l'absorbeur (20) est endommagé.
